# EUROPÄISCHE PATENTSCHRIFT

(11) **EP 4 218 659 B1**
(45) Veröffentlichungstag und Bekanntmachung des Hinweises auf die Patenterteilung: **09.07.2025**
(21) Anmeldenummer: 22153466.2
(22) Anmeldetag: 26.01.2022
(51) Int. Cl.: A61C 5/62, A61C 5/66

(54) **DENTALKARTUSCHE**
DENTAL CARTRIDGE
CARTOUCHE DENTAIRE

(43) Veröffentlichungstag der Anmeldung: 02.08.2023
(73) Patentinhaber: Ivoclar Vivadent AG, 9494 Schaan (LI)
(72) Erfinder: LICHTENSTEIGER, Markus, 9462 Montlingen (CH)
(74) Vertreter: Baldus, Oliver

(56) Entgegenhaltungen:
- EP-A1- 2 818 133
- CH-B1- 710 763
- GB-A- 2 490 365
- US-A- 2 717 726

## Beschreibung

Die Erfindung betrifft eine Dentalkartusche gemäß dem Oberbegriff von Anspruch 1.

Es ist bekannt, in eine Dentalkartusche einen speziellen Dentalwerkstoff zu füllen, um den Dentalwerkstoff später bei einer Zahnbehandlung einzusetzen. Dazu wird die Dentalkartusche in einen Applikator, auch Injektor genannt, eingesetzt. Mittels eines Pistolengriffs und einer Hubmechanik wird der Dentalwerkstoff mit Hilfe eines Zyklinderkolbens aus einem Zylinderraum in der Dentalkartusche durch eine Ausbringdüse hindurch ausgedrückt. Mit dem Dentalwerkstoff werden dann Kavitäten in Molaren oder anderen Zähnen ausgefüllt. Der Dentalwerkstoff kann optional je nach Spezifikation beispielsweise mittels UV-Licht beschleunigt ausgehärtet werden.

Eine typische Dentalkartusche hat einen Zylinderkörper mit einer in einem Winkel von beispielsweise 45° abstehenden Ausbringdüse. Der Zylinderkörper und die Ausbringdüse sind einstückig hergestellt. Der Zylinderkörper ist an einem ersten Stirnseitenende mit einem ersten Verschlussdeckel verschlossen. An dem gegenüberliegenden zweiten Stirnseitenende des Zylinderkörpers ist die Ausbringdüse ausgebildet. An der Spitze der Ausbringdüse ist ein zweiter Verschlussdeckel aufgesetzt, der den Dentalwerkstoff bei der Lagerung am Austritt hindert. Zum Applizieren wird der Verschlussdeckel abgenommen.

Es ist auch eine Dentalkartusche, insbesondere zum Einsetzen in einen Injektor, mit einem Zylinderkörper mit einer Greifschulter an einem ersten Stirnseitenende, mit einem Zylinderraum, in welchen Dentalwerkstoff einfüllbar ist, und mit einer Ausbringdüse, welche an einem zweiten der Greifschulter gegenüberliegenden Stirnseitenende des Zylinderkörpers angeordnet ist, wobei der Zylinderkörper und die Ausbringdüse über ein Gelenk verbunden sind. Die Greifschulter dient der Befestigung im Injektor zum Aufbringen eines Gegendrucks beim Ausdrücken des Dentalwerkstoffs aus dem Zylinderraum.

Die DE 10 2020 109 432 A1 beschreibt eine Dentalkartusche mit einem Zylinderkörper, in welchem Dentalwerkstoff aufnehmbar ist. Am Zylinderkörper ist gelenkbeweglich eine Ausbringdüse angeordnet. Die Ausbringdüse weist eine Gelenkpfanne auf, die einen Gelenkkopf des Zylinderkopfs übergreift. Die Ausbringdüse und der Zylinderkörper sind im Montagespritzguss hergestellt.

Die CH 710 763 B1 beschreibt eine Spritze zur Applikation einer Dentalmasse mit einem zylindrischen Behälterteil und mit einer Ausspritzdüse. Die Ausspritzdüse ist relativ zum Behälterteil schwenkbar.

Die EP 0 157 121 B beschreibt einen Behälter zum Mischen und Ausbringen von Dentalmassen mit einer Kammer und mit einer Ausbringdüse. Die Ausbringdüse ist verschwenkbar in einem Hauptteil gelagert. Die Ausbringdüse umfasst einen drehbaren Lagerkörper, mit welchem das vordere Ende der Kammer verschließbar ist. Die Druckschrift GB 2490365 A betrifft eine aufschraubbare Düse für einen Behälter mit einem extrudierbaren Produkt, wie beispielsweise eine Dichtmasse, die in Badezimmern verwendet wird.

Die Druckschrift US 2,717,726 A betrifft eine zweiteilige Ventil- und Ausgussstruktur zum Einbau in einen flüssigkeitshaltenden Behälter, die manuell in die Auswurfposition zum Ausgeben von Flüssigkeit und in die "Aus"-Position betätigt werden kann.

Die Druckschrift EP 2 818 133 A1 offenbart eine Dentalkartusche mit abnehmbarer Ausbringdüse, wobei der Kartuschenkörper und die Ausbringdüse über ein Gelenk verbunden sind.

Demgegenüber liegt der Erfindung die Aufgabe zugrunde, eine Dentalkartusche nach dem Oberbegriff von Anspruch 1 zu schaffen, sodass eine Dentalkartusche kompakt und effizient herstellbar ist.

Die Aufgabe wird durch einen Gegenstand nach dem Anspruch 1 gelöst. Vorteilhafte Weiterbildungen ergeben sich aus den Unteransprüchen.

Erfindungsgemäß ist es vorgesehen, dass ein Gelenk mit einem Gelenkkopf in Form einer Kugel als Teil der Ausbringdüse und mit einer zum Gelenkkopf komplementären Gelenkpfanne als Teil des Zylinderkörpers an einem - zweiten - Stirnseitenende und einer Greifschulter gegenüberliegend ausgebildet ist. Die Ausbringdüse ist gegenüber dem Zylinderkörper in einem dreidimensionalen Schwenkbereich schwenkbar -und insbesondere auch drehbar.

Eine derartige Dentalkartusche bringt mehrere Vorteile mit sich. Die Ausbringdüse ist auch bei hohen Presskräften, die beim Ausdrücken des Dentalwerkstoffs auf die Ausbringdüse wirken, kompakt und sicher im Zylinderkörper gelagert. Die Ausbringdüse ist somit aus dem Gelenk weg grundsätzlich nicht vom oder aus dem Zylinderkörper lösbar. Ein Gelenk, das um alle Achsen im dreidimensionalen kartesischen Koordinatensystem schwenkbar ist, ermöglicht bei der Anwendung einen besseren Zugang zu Kavitäten im Applikationsprozess, so dass der Dentalwerkstoff sicherer am gewünschten Ort eingebracht werden kann. Die Ergonomie beim Applikationsprozess ist somit für den Anwender und den Patienten verbessert. Die Ausbringdüse hat drei rotatorische Freiheitsgrade und keine translatorischen Freiheitsgrade. Die Ausbringdüse lässt sich um die drei Achsen x-y-z drehen und schwenken. Die Ausbringdüse weist eine Tülle auf. Die Tülle lässt sich greifen, und durch Verschwenken der Tülle lässt sich die Gelenkkugel der Ausbringdüse in der Gelenkpfanne des Zylinderkörpers verschwenken.

In vorteilhafter Ausgestaltung der Erfindung ist die Ausbringdüse oder zumindest deren Tülle aus einem gegenüber dem Zylinderkörper weicheren Werkstoff hergestellt. Dann ist es möglich, die Tülle so zu biegen, dass sie - z.B. für das Füllen distaler Kavitäten - eine über ihre Schwenkbarkeit hinausgehend - optimierte Ausbringposition einnimmt..

Vorteilhafterweise ist die Ausbringdüse mit Ihrem Gelenkkopf in der Gelenkpfanne des Zylinderkörpers so verschwenkbar, dass ein Kanal in dem Gelenkkopf entweder an der Gelenkpfanne anliegt oder zum Zylinderraum hin offen ist. In der ersten Position ist ein Ausbringweg des Dentalwerkstoffs aus dem Zylinderraum verschlossen und in der zweiten geöffnet.

Eine Schwenkachse Z, um die der Gelenkkopf in der Gelenkpfanne schwenkbar ist, erstreckt sich quer zur Achse des Zylinderraumes. Ein Schwenkwinkel des Gelenkkopfes beträgt mindestens ca. 45°, bevorzugt bis ca. 135°. Der Kanal durch den Gelenkkopf ist Teil des Ausbringwegs für das Dentalmaterial. In der zweiten Position ist er verschlossen. Auf einen Verschlussdeckel, der auf die Spitze der Ausbringdüse aufsetzbar ist, kann erfindungsgemäß verzichtet werden. Dadurch werden Bauteile, Fertigungssschritte und Material eingespart. Dem Gelenk und der Ausbringdüse kommt somit eine Doppelfunktion zu. Die erfindungsgemäß besonders ausgestaltete Ausbringdüse bildet einerseits einen stirnseitigen Verschluss des Zylinderraums, welcher ein Austreten des Dentalwerkstoffs verhindert und auch eine längere Lagerung ermöglicht.. Andererseits lässt sich die Ausbringdüse in einem großen sich dreidimensional erstreckenden Schwenkbereich ergonomisch um zwei Achsen schwenken und um eine weitere Achse um bis zu 360° verdrehen, so dass jede Position senkrecht zum Zylinderraum von der Ausbringdüse erreichbar ist.

Das Gelenk ist als Kugelgelenk ausgebildet. Die Gelenkkugel mit der an ihr angebrachten Ausbringdüse ist wie bei einem Kugelgelenk üblich in alle Raumrichtungen, also dreidimensional, verschwenkbar. Die Gelenkpfanne erstreckt sich so um die Gelenkkugel herum, dass diese zum einen sicher in der Gelenkpfanne gehalten ist, zum anderen aber soweit wie möglich verschwenkbar ist. Der Umschlingungswinkel, also der Winkel, der angibt, wie weit sich die Gelenkpfanne um den Gelenckopf herum erstreckt, beträgt mehr als 180 Grad, z.B. 200 Grad oder 220 Grad, oder ein beliebiger Winkel zwischen 185 Grad und 270 Grad.

Die Gelenkpfanne läuft - gleichsam noch vorne hin - in einem Kragen aus, der eine Schwenkanschlag für die aus der Gelenkkugel vorspringende Ausbringdüse bildet.

So ergibt sich - in Abhängigkeit von dem Durchmesser der Ausbringdüse am deren Ansatz an der Gelenkkugel - ein freier dreidimensionaler Verschwenkbereich. Dieser erstreckt sich z.B. über einen Winkel von 45 Grad, bezogen auf die Achse des Zylinderkörpers, kann aber auch nach Belieben kleiner oder größer gewählt werden, z.B. zwischen 20 Grad und 80 Grad.

In diesem freien Verschwenkbereich ist die Dentalkartusche offen. Der die Gelenckugel und die Ausbringdüse durchtretende Kanal ist an seinem rückwärtigen Ende also nicht durch die Gelenkpfanne verschlossen, sondern zum Zylinderraum offen.

Wenn Dentalmaterial in der Dentalkartusche aufgenommen ist, lässt sich dieses bei Druckbeaufschlagung eines in den Zylinderkörper eintretenden Kolbens in an sich bekannter Weise ausdrücken und an der gewünschten Stelle aufbringen. Dem zahnarzt kommt hierbei die freie dreidimensionale Verschwenkbarkeit der Ausbringdüse zugute, denn dadurch muss er nicht erst umständlich die gesamte Dentalkartusche einschließlich der Ausdrückvorrichtung verdrehen, sondern kann rasch die Ausbringdüse zu dem gewünschten Applikationsort ausrichten.

Erfindungsgemäß ist die Dentalkartusche aber bei Bedarf auch verschließbar, und zwar rein durch Verschwenken über den freien Verschwenkbereich hinaus.

Sobald das Verschwenken über den freien Verschwenkbereich hinaus fortgesetz wird, gerät die rückwärtige Öffnung des Kanals in Anlage an die Gelenkpfanne. Wenn das Verschwenken fortgesetzt wird, wird sei schließlich von der Gelenkpfanne verschlossen. Dies ist die Schließstellung der Dentalkartusche.

Um diese zu ermöglichen, weist der Zylinderkörper in einer bevorzugten Ausgestaltung eine Ausnehmung der Gelenkpfanne auf. Diese ist nach vorne hin, also in die von der Greifschulter abgewandte Richtung offen. Sie vermag die Ausbringdüse an ihrem Ansatz an der Gelenkkugel aufzunehmen. Bevorzugt sind die Abmessungen von Ansatz und Ausnehmung so gewählt, dass der Ansatz in der Ausnehmung verrastbar ist.

Gemäß einer vorteilhaften Ausführungsform ist die Ausbringdüse der Dentalkartusche an dem Gelenkkopf mit einem gegenüber dem Gelenkkopf vorspringenden Halsring ausgebildet, der in einer komplementären, insbesondere in der Draufsicht gesehen teilkreisförmigen, Ausnehmung mit einer Kreisachse senkrecht zur Zylinderachse des Zylinderraums seitlich an der Gelenkpfanne verrastbar ausgebildet ist.

Wenn die Ausbringdüse, insbesondere mit Ihrem Halsring, in der Ausnehmung ist, erstreckt sie sich quer zur Achse des Zylinderkörpers.

Weiter ist für die Verrastfunktion der Ausbringdüse bevorzugt, eine Sehne der Ausnehmung, die eine Durchgangsöffnung für den Ansatz oder Halsring zum freien Schwenkbereich der Gelenkkugel und der Ausbringdüse in der Gelenkpfanne ausbildet, geringfügig kleiner als der Durchmesser des Ansatzes oder Halsrings, also insbesondere wie bei einer Presspassung.

Ferner lässt sich die Ausbringdüse um 360° drehen. In einer bevorzugten Ausgestaltung ist die Ausbringdüse abgekröpft. Damit der Ausbringort nach Belieben des Zahnarztes auch durch Verdrehen der Ausbringdüse beliebig festlegen.

Weiter bevorzugt umfasst die Ausbringdüse der Dentalkartusche eine Tülle mit einer Tüllenachse. In dem Gelenkkopf ist ein, insbesondere sich konisch verjüngender, Kanal mit einer Kanalachse ausgebildet, wobei die Tüllenachse zur Bereitstellung der Abkröpfung zur Kanalachse bevorzugt einen Winkel von ca. 45° ausbildet. Dieser Abkröpfwinkel kann aber auch beliebig größer oder kleiner gewählt werden, z.B. zwischen 0 Grad (keine Abkröpfung) und 80 Grad. Somit lässt sich die Tüllenachse um 90° von einer geraden, zur Zylinderachse des Zylinderraums parallelen Stellung in eine schräge Stellung, ggf. sogar senkrecht zu Zylinderachse, verschwenken. Damit lassen sich auch distal liegende Kavitäten an Molaren gut erreichen. Die Ausbringdüse ist insofern bis 360° dreidimensional im Kugelgelenk schwenkbar und drehbar, So lässt sich jeder Winkel, auch bei gleichbleibender Position der Ausbringvorrichtung der Dentalkartusche während der Applikation, erreichen.

Bevorzugt ist die Ausbringdüse sich in der Außenkontur verjüngend ausgebildet.

Gemäß einer weiter bevorzugten Ausführungsform ist der Durchmesser des Gelenkkopfes größer als der Durchmesser des Zylinderraums ausgebildet und die Gelenkpfanne der Dentalkartusche ist als Wulst an dem der Greifschulter gegenüberliegenden Ende gegenüber dem restlichen Zylinderkörper ausgebildet. Somit ist der Zylinderkörper materialsparend herstellbar. Es erfolgt eine gute Abdichtung des Zylinderraums gegenüber der Ausbringdüse durch das verschließbare Gelenk. Ein größerer Durchmesser des Gelenkkopfes als der des Zylinderraums verbessert die kompakte Lagerung.

Um den Fertigungsvorgang der Dentalkartusche zu vereinfachen und zu verbessern, sowie die Teilezahl zu reduzieren, sind der Zylinderkörper und die Ausbringdüse mittels Montagespritzguss, insbesondere mittels Zweikomponenten-Montagespritzguss, hergestellt. Weitere Montagevorgänge sind nicht mehr notwendig.

Gemäß einer weiterbildenden Ausführungsform unterscheidet sich der Werkstoff des Zylinderkörpers vom Werkstoff der Ausbringdüse, wobei eine Werkstoffpaarung eingesetzt ist, so dass keine, weiter bevorzugt eine mäßige, Haftung zwischen den Werkstoffen im Gelenk auftritt. Unterschiedliche Werkstoffe haben den Vorteil, dass Sie sich im Fertigungsvorgang, im Spritzgussvorgang leichter trennen lassen, so dass sich ein Gelenk leicht(er) ausbilden lässt. Der Zylinderkörper kann aus einem härteren Kunststoff hergestellt sein als die Ausbringdüse. Eine elastische Ausbringdüse hat den Vorteil, dass beim Ausfüllen der Kavitäten manuelle Anpressdrücke ausgeglichen werden. Eine fehlende Haftung zwischen den beiden Werkstoffen hat den Vorteil, dass das Gelenk frei beweglich ist. Eine mäßige Haftung hat den Vorteil, dass die eingestellte Position des Gelenks bis zu einer bestimmten Druckgrenze erhalten bleibt.

Es lassen sich beliebige geeignet Materialpaare für den Montagespritzguss einsetzen. Zu diesen gehören:
PA66/POM
PPS/POM
PPS/PA6
PEEK/PPS

Es sind aber auch beliebige andere geeignete Werkstoffpaarungen möglich, z.B. TPE/ABS, PA6 mod./PE, PA6 mod. POM, PE/PMMA, PC/PS, PP/PMMA, PP/POM, PP/PS.

Wenn ein elastischerer Werkstoff für die Gelenkkugel mit der Ausbringdüse gewählt wird, sind z.B. folgende Materialpaarungen möglich: PA6/EPDM, PA6/NR, PA6/SBR, oder z.B. PBT/NR oder PBT/SBR.

Durch eine geeignete Einstellung des Temperaturabstandes beim Spritzgießen der Materialien lässt sich auch der Reibungskoeffizient nach Belieben beeinflussen.

Eine erfindungsgemäße Dentalkartusche lässt sich insbesondere in einen Injektor oder eine Ausbringsvorrichtung einsetzen. Zwei Bauteile, ein Zylinderkörper mit der Gelenkpfanne und eine Ausbringdüse mit der Gelenkkugel, sind über ein Kugelgelenk verbunden. Beide Bauteile werden im Montagespritzguss-Verfahren, insbesondere in einem einzigen Spritzgusswerkzeug, in einem Zuge hergestellt.

Mit Schiebern im Spritzgusswerkzeug wird je nach Bedarf zuerst die Ausbringdüse gespritzt und im zweiten Schritt an die Ausbringdüse der Zylinderkörper mit der Gelenkpfanne angespritzt. Es versteht sich, dass auch umgekehrt zuerst der Zylinderkörper und dann die Ausbringdüse gespritzt werden kann. Um eine einheitliche Oberfläche des Gelenkkopfs zu erzeugen, wird bevorzugt zuerst die Ausbringdüse im Spritzgusswerkzeug erzeugt. Vorteilhafterweise werden weitere Montageschritte, eingespart. Weitere Vorteile, Einzelheiten und Merkmale ergeben sich aus der nachfolgenden Beschreibung mehrerer Ausführungsformen der Erfindung anhand der Zeichnungen. Es zeigen:
Fig. 1 eine Dentalkartusche perspektivisch im Querschnitt mit geschlossener Ausbringdüse;
Fig. 2 eine vollständige Dentalkartusche perspektivisch gem. Fig. 1;
Fig. 3 eine Dentalkartusche perspektivisch im Querschnitt mit geschlossener Ausbringdüse;
Fig. 4 eine vollständige Dentalkartusche perspektivisch gem. Fig. 3,
Fig. 5 eine Dentalkartusche perspektivisch im Querschnitt mit einer Tülle in Richtung im Wesentlichen den Zylinderkörper verlängernd;
Fig. 6 eine vollständige Dentalkartusche perspektivisch gem. Fig. 5;
Fig. 7 eine Dentalkartusche perspektivisch im Querschnitt mit der Tülle in Richtung senkrecht zur Zylinderachse des Zylinderkörpers;
Fig. 8 eine vollständige Dentalkartusche perspektivisch gem. Fig. 7;
Fig. 9 eine Dentalkartusche perspektivisch im Querschnitt mit geschlossener Ausbringdüse mit einem Einsatz in einem Umfangsabschnitt des Zylinderkörpers; und
Fig. 10 eine vollständige Dentalkartusche perspektivisch gem. Fig. 9.

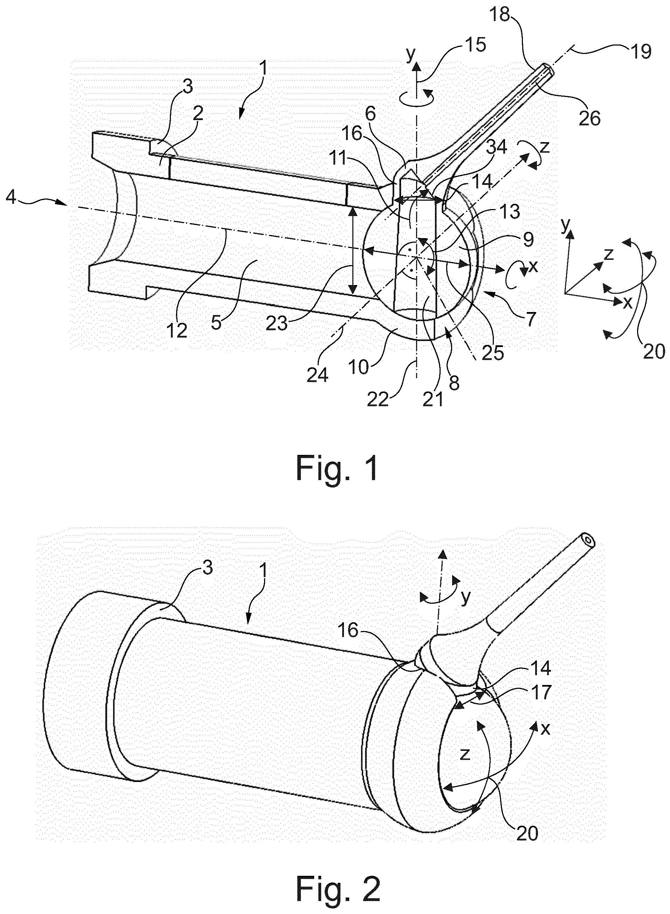

Die Fig. 1 zeigt eine Dentalkartusche 1 zum Einsetzen in einen nicht dargestellten Injektor. Die Dentalkartusche 1 ist mit einem Zylinderkörper 2 und mit einer Ausbringdüse 6 ausgebildet. Der Zylinderkörper 2 weist eine Greifschulter 3 an einem ersten Stirnseitenende 4 und einen Zylinderraum 5 auf, in welchen Dentalwerkstoff einfüllbar ist. Die Ausbringdüse 6 ist an einem zweiten Stirnseitenende 7 des Zylinderkörpers 2 angeordnet, welches der Greifschulter 3 gegenüberliegt. In dem Zylinderraum 5 ist ein Dentalwerkstoff zum Auffüllen von Kavitäten bei einer Zahnbehandlung gelagert. Der Zylinderraum 5 ist an beiden Stirnseitenenden verschlossen, am Stirnseitenende 6 durch eine Folie als Verpackungsmaterial oder einen nicht dargestellten Kolben des Injektors und am zweiten Stirnseitenende 7 durch das erfindungsgemäß besondere Kugelgelenk in seiner Schließstellung.

Der Zylinderkörper 2 und die Ausbringdüse 6 sind über ein Gelenk 8 verbunden. Das Gelenk 8 ist mit einem Gelenkkopf 9 in Form einer Kugel als Teil der Ausbringdüse 6 und mit einer komplementären Gelenkpfanne 10 als Teil des Zylinderkörpers 2 am zweiten Stirnseitenende 7, gegenüberliegend zur Greifschulter 3, ausgebildet. Die Ausbringdüse 6 ist gegenüber dem Zylinderkörper 2 in einem Schwenkbereich 20 um die zwei Achsen x und z schwenkbar und um die y-Achse drehbar.

Die Fig. 1 zeigt die Dentalkartusche 1 in einer Querschnittsansicht mit einem geschlossenen Zylinderraum 5 am zweiten Stirnseitenende 7. Der Dentalwerkstoff wird in Zylinderraum 5 vom ersten Ende von der ersten Stirnseite 4 her eingefüllt. Nach dem Einfüllvorgang wird die erste Stirnseite 4 ebenfalls vollständig bis zum Gebrauch, z.B.- mit einer nicht gezeigten Folie, verschlossen.

Sobald die Dentalkartusche 1 in einen Injektor eingelegt ist, wird ein Kolben des Injektors im Applikationsvorgang von der Stirnseite 4 in den Zylinderraum 5 eingeführt. Der Dentalwerkstoff wird aus dem Zylinderraum 5 in Richtung des zweiten Stirnseitenendes 7 in die Ausbringdüse 6 gedrückt.

Die Ausbringdüse 6 ist an dem Gelenkkopf 9 mit einem abstehend verlängerten Halsring 14 ausgebildet, der in einer komplementären kreisförmigen Ausnehmung 16 mit einer Kreisachse 15 senkrecht zur Zylinderachse 12 des Zylinderraums 2 und senkrecht zur Schwenkachse 24 am Umfang der Gelenkpfanne 10 verrastbar ausgebildet ist. Die Kreisachse 15 fällt mit der Y-Schwenkachse 22 des Gelenks 8 zusammen, ist also zu dieser kongruent.

Zur Realisierung der Verrastfunktion ist eine Sehne 17 der Ausnehmung 16, die eine Durchgangsöffnung für den Halsring 14 zum Schwenkbereich 20 innerhalb der Gelenkpfanne 10 ausbildet, geringfügig,kleiner als der Durchmesser 34 des Halsrings 14 ausgebildet.

Das Gelenk 8 der Dentalkartusche 1 hat eine Doppelfunktion. Es dient zum Verschließen und Öffnen des Ausbringwegs 11 für den Dentalwerkstoff aus dem Zylinderraum 5. Zum Öffnen wird die Ausbringdüse 6 aus der Ausnehmung 16 herausgeschwenkt und erstreckt sich dann weiter nach vorne, also von der Greifschukter weg. Eine Schwenkachse 24 des Zylinderkörpers 2 ist schräg zur oder sogar senkrecht zur Zylinderachse 12 und senkrecht zu einer Kreisachse 15 ausgebildetund mit der Z-Achse der Ausbringdüse 6 kongruent In der offenen Stellung ist eine freie Verschwenkbarkeit der Ausbringdüse 6 gegeben, einem Schwenkwinkel 13 von mindestens 45° bis ca. 135°, bezogen auf die Zylinderachse 12.

Eine freier Verschwenkbereich 20 der Dentalkartusche umfasst für die Ausbringdüse 6 Schwenkwinkel um ihre drei Achsen x-y-z. Jeweils von der Zylinderachse 12 ist der freie für die Applikation mögliche Schwenkbereich 20 mindestens 45° in beide Richtungen, insgesamt also mindestens 90°, um die x-y-Achse groß. Um die Z-Achse ist die Ausbringdüse um 360° drehbar.

Die Ausbringdüse 6 umfasst eine Tülle 18 mit einer Tüllenachse 19. Die Tülle 18 hat einen Tüllenkanal 26 mit gleichem Innendurchmesser über die gesamte Tüllenlänge . Somit ist eine Dosierung des Dentalwerkstoffs manuell exakt steuerbar. In dem Gelenkkopf 9 ist ein, insbesondere sich konisch verjüngender, Kanal 21 mit Kanalachse 22 ausgebildet, der in den abgeschrägten Tüllenkanal 26 mündet. In der in Fig. 1 gezeigten, geschlossenen Position der Ausbringdüse 6 fällt die Kanalachse 22 mit der Y-Achse zum Drehen um 360° und der Kreisachse 15 zusammen.

Die Tüllenachse 19 bildet zur Kanalachse 22 bevorzugt einen Winkel von ca. 45° aus. Der Kanal 21 ist bis in den Halsring 14 der Ausbringdüse 6 ausgebildet. Die Tülle 18 bildet vom Halsring 14 her zumindest in der Außenkontur eine verjüngende Trichterform aus.

Der Durchmesser 25 des Gelenkkopfes 9 ist größer als der Durchmesser 23 des Zylinderraums 5 ausgebildet. Somit bildet die Gelenkpfanne 10 einen Wulst an dem zweiten Ende angrenzend zur zweiten Stirnseite 7 gegenüber dem restlichen Zylinderkörper 2. Der Gelenkkopf 9 ist damit stabil und sicher gelagert. Der Kanal 21 der Ausbringdüse 6 im Gelenkkopf 9 ist dadurch möglichst groß, was zu einer reduzierten Kraft beim Ausdrücken führt.

Der Zylinderkörper 2 und die Ausbringdüse 6 sind bevorzugt in einem nicht gezeigten integrierten Spritzgusswerkzeug, bevorzugt mittels eines Zwei-Komponenten-Montagespritzguss, hergestellt. Damit eine mäßige oder keine Haftung zwischen dem Zylinderkörper 2 und der Ausbringdüse 6 auftritt, wird eine geeignete Werkstoffpaarung gewählt. Mögliche Werkstoffpaarungen sind dem Fachmann beispielsweise aus dem eingangs genannten Stands der Technik bekannt.

Fig. 2 zeigt den Körper der Dentalkartusche 1 aus Figur 1 in perspektivischer Ansicht, aber in der Schließstellung. Die drei Freiheitsgrade des Schwenkbereichs 20, das Drehen um die y-Achse und das Schwenken um die x-z-Achsen, sowie das Verrasten des Halses 14 in der Ausnehmung 16 mit Hilfe der Sehne 17 als Presspassung sind dargestellt.

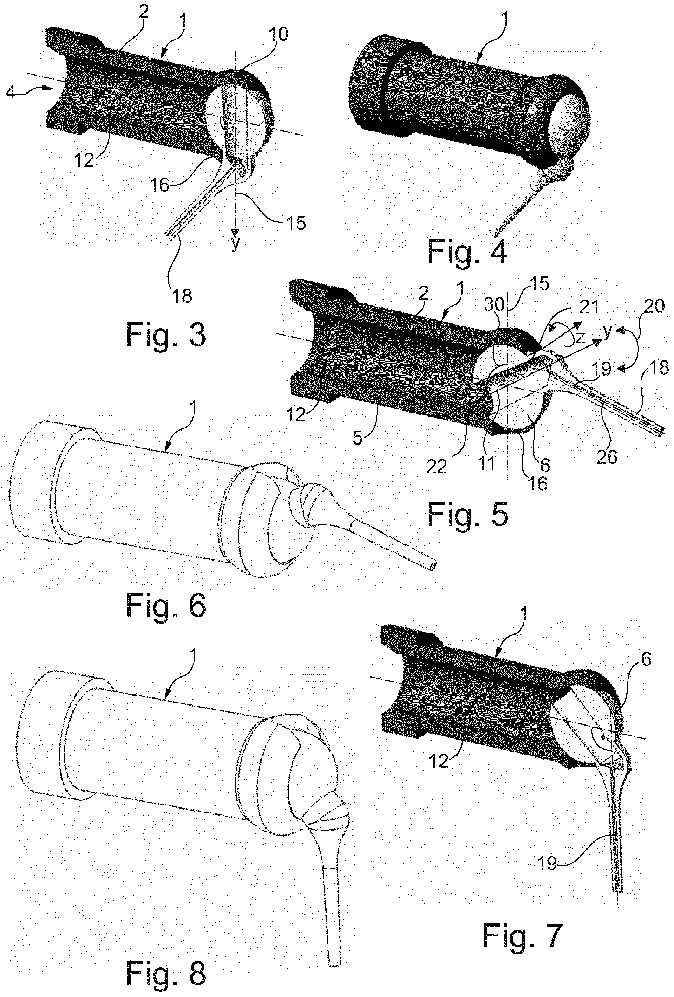

Fig. 3 zeigt eine perspektivische Querschnittsansicht ähnlich Fig. 1, mit dem Unterschied, dass die Ausnehmung 16 in der Gelenkpfanne 10 mit der Y-Achse nicht nach oben, sondern um die Zylinderachse 12 um 180° gedreht und somit nach unten gerichtet ist. Die Tülle 18 ist um 180° um die Y-Achse gegenüber Darstellung in der Fig. 1 zum ersten Stirnseiteende 6 gedreht gezeigt. Dies ist beispielsweise ein Lagerungszustand In diesen ist die Länge der Dentalkartusche 1 minimiert. Die Höhe und die Breite /Tiefe der Dentalkartusche 1 sind in beiden Lagerungszuständen, d. h. gemäß der Fig. 1 und der Fig. 3 identisch. Die Y-Achse der Ausbringdüse ist in der Figur 3 kongruent zur Kreisachse 15 der Ausnehmung 16, die beide im rechten Winkel zur Zylinderachse 12 stehen.

Fig. 4 zeigt die Dentalkartusche 1 gemäß der Fig. 3 als vollständigen Körper.

Fig. 5 zeigt die Dentalkartusche 1 im Längsquerschnitt, wobei die Ausbringdüse 6 um einen Winkel 30, mit mehr als 90°, d. h. beispielsweise ca. 120°, gegenüber der Ansicht der Fig. 3 nach oben geschwenkt ist. Die Ausbringdüse 6 lässt sich im Schwenkbereich 20 trotz der Ausnehmung 16 derart weit verschwenken, dass der Ausbringweg 11 zum Applizieren des Dentalwerkstoffes aus dem Zylinderraum 5 durch den Ausbringkanal 21 und durch den Tüllenkanal 26 der Tülle 18 in sich geschlossen bleibt. Die Tüllenachse 19 ist um ca. 15° nach unten bezüglich der Zylinderachse 12 geschwenkt. Die Tülle 18 ist somit eine Längsverlängerung des Zylinderkörpers 2 im Wesentlichen.

Fig. 6 zeigt den vollständig geschlossenen Körper der Dentalkartusche 1 in dem Zustand gemäß Fig. 5.

Fig. 7 zeigt entsprechend der Fig. 3 und 5 die Längsquerschnittshälfte der Dentalkartusche 1 mit dem Unterschied, dass die Ausbringdüse 6 im Gegensatz zu Fig. 3 um ca. 45° geschwenkt ist, so dass die Tüllenachse 19 zur Zylinderachse 12 im Wesentlichen senkrecht geschwenkt ist. Kavitäten können somit um 90° abgewinkelt aus einer horizontalen Lage des Zylinderkörpers 2 zum Ausfüllen erreicht werden.

Fig. 8 zeigt die Dentalkartusche 1 als vollständigen Körper in einem Schwenkzustand der Ausbringdüse 6 gemäß Fig. 7.

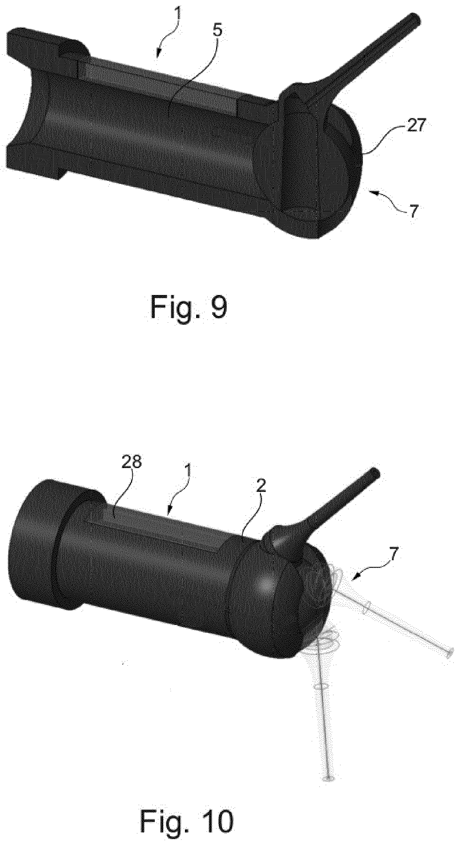

Fig. 9 zeigt im Wesentlichen die Ausführungsform gemäß Fig. 1. In einem oben dargestellten Bereich des Zylinderkörpers 2 ist ein Fenster 28 ausgebildet, das sich innen und außen bündig mit dem Zylinderkörper 2 erstreckt. Damit ist der Füllungszustand des Zylinderkörpers 2 im Zylinderraum 5 mit Dentalwerkstoff für den Anwender unmittelbar ersichtlich. Ferner ist auch die Farbe und zumindest ungefähr die Konsistenz des Dentalwerkstoffs für den Anwender ersichtlich.

In einer nicht dargestellten Ausführungsform erstreckt sich parallel zur Achse des Zylinderkörpers 2 ein beidseitiger Schlitz durch die Gelenkpfanne hindurch. Durch Schlitze wird die Nachgiebigkeit der Gelenkpfanne 10 erhöht, so dass die Haftung zwischen Gelenkkopf 9 und Gelenkpfanne 10 vermindert wird.

## Patentansprüche

1. Dentalkartusche (1), insbesondere zum Einsetzen in einen Injektor, mit einem Zylinderkörper (2) mit einer Greifschulter (3) an einem Stirnseitenende (4) und mit einem Zylinderraum (5), in welchen Dentalwerkstoff einfüllbar ist, mit einer Ausbringdüse (6), welche an einem der Greifschulter (3) gegenüberliegenden Stirnseitenende (7) des Zylinderkörpers (2) angeordnet ist, wobei der Zylinderkörper (2) und die Ausbringdüse (6) über ein Gelenk (8) verbunden sind, **dadurch gekennzeichnet, dass**
- das Gelenk (8) mit einem Gelenkkopf (9) in Form einer Kugel als integraler Teil der Ausbringdüse (6) und mit einer zum Gelenkkopf (9) komplementären Gelenkpfanne (10) als integraler Teil des Zylinderkörpers (2) am der Greifschulter (3) gegenüberliegenden Stirnseitenende (7) ausgebildet ist, und dass die Ausbringdüse (6) gegenüber dem Zylinderkörper in einem dreidimensionalen Schwenkbereich schwenkbar ist,
- wobei der Durchmesser (18) des Gelenkkopfes (9) größer als der Durchmesser des Zylinderraums (5) ausgebildet ist.

2. Dentalkartusche nach Anspruch 1, **dadurch gekennzeichnet, dass** das Gelenk (8) als Mechanismus zum Verschließen und Öffnen eines Ausbringwegs (11) von Dentalwerkstoff aus dem Zylinderraum (5) mit einer Schwenkachse (12) und mit einem Schwenkwinkel (13) von mindestens ca. 110°, bevorzugt mindestens 135°, ausgebildet ist.

3. Dentalkartusche nach Anspruch 1 oder 2, **dadurch gekennzeichnet, dass** an der Gelenkpfanne (10) des Zylinderkörpers eine Ausnehmung (16) ausgebildet ist, die sich außerhalb der Zylinderachse (12) des Zylinderraums (5) erstreckt, und dass die Ausbringdüse (6) mit einem sich an die Gelenkkugel anschließenden Ansatz (14) in die Ausnehmung (16) schwenkbar und damit in eine Schließstellung der Dentalkartusche verbringbar ist.

4. Dentalkartusche nach Anspruch 3, **dadurch gekennzeichnet, dass** die Ausnehmung (16) im wesentlichen U-förmig ausgebildet ist und nach vorne, also zu der der Greifschulter gegenüberliegenden Seite, offen ist.

5. Dentalkartusche nach Anspruch 3 oder 4, **dadurch gekennzeichnet, dass** die Ausbringdüse (6) an der Ausnehmung (16) verrastbar ausgebildet ist, und insbesondere, dass eine Sehne der Ausnehmung (16), die eine Durchgangsöffnung für den Halsring zum Schwenkbereich innerhalb der Gelenkpfanne ausbildet, kleiner, insbesondere um weniger als 10% kleiner, als der Durchmesser des Ansatzes (14) ausgebildet ist.

6. Dentalkartusche nach Anspruch 1 bis 5, **dadurch gekennzeichnet, dass** die Ausbringdüse (6) im offenen Zustand der Dentalkartusche in einem freien Verschwenkbereich in allen Richtungen verschwenkbar ist, wobei der Schwenkwinkel des Verschwenkbereich, von der Zylinderachse aus betrachtet, mindestens 45° beträgt.

7. Dentalkartusche nach Anspruch 1 bis 6, **dadurch gekennzeichnet, dass** sich ein Kanal (21) für den Gelenkkopf hindurch erstreckt, dessen dem Zylinderraum (5) zugewandtes Ende durch Verschwenken der Ausbringdüse (6) verschließbar ist.

8. Dentalkartusche nach Anspruch 1 bis 7, **dadurch gekennzeichnet, dass** die Ausbringdüse eine Tülle mit einer Tüllenachse umfasst und in dem Gelenkkopf ein Kanal (21) mit einer Kanalachse ausgebildet ist, wobei die Tüllenachse zur Kanalachse in einem Winkel zwischen 0° und 70°, bevorzugt zwischen 30° und 60° ausgebildet ist, wobei insbesondere der Kanal bis in den Halsring der Ausbringdüse sich verjüngend ausgebildet sind.

9. Dentalkartusche nach Anspruch 1 bis 8, **dadurch gekennzeichnet, dass** die Gelenkpfanne als gegenüber dem restlichen Zylinderkörper vorspringender Wulst am der Greifschulter (3) gegenüberliegenden Stirnseitenende (5) ausgebildet ist.

10. Dentalkartusche nach Anspruch 1 bis 9, **dadurch gekennzeichnet, dass** der Werkstoff des Zylinderkörpers sich vom Werkstoff der Ausbringdüse unterscheidet, wobei eine Werkstoffpaarung mit einem Gleitreibungskoeffizienten µ_{Gleit} zwischen den Werkstoffen von weniger als 0,8, insbesondere von weniger als 0,6 im Gelenk eingesetzt ist .

11. Dentalkartusche nach Anspruch 9 oder 10, **dadurch gekennzeichnet, dass** die Werkstoffe von Zylinderkörper und Ausbringdüse aus für den Materialspritzguss geeigneten Werkstoffpaaren ausgewählt sind und bevorzugt unterschiedliche Wärmeausdehnungskoeffizienten aufweisen, und insbesondere aus PA66/POM, PPS/POM, PPS/PA6 oder PEEK/PPS bestehen.

12. Dentalkartusche nach Anspruch 1 bis 11, **dadurch gekennzeichnet, dass** der Zylinderkörper und die Ausbringdüse mittels Montagespritzguss, insbesondere mittels Zweikomponenten-Montagespritzguss, hergestellt sind.

## Claims

1. A dental cartridge (1), in particular for insertion into an injector, having a cylinder body (2) with a gripping shoulder (3) at one end face (4) and having a cylinder chamber (5) into which dental material can be filled, with a dispensing nozzle (6) which is arranged at an end face (7) of the cylinder body (2) opposite the gripping shoulder (3), wherein the cylinder body (2) and the dispensing nozzle (6) are connected via a joint (8), **characterized in that**
- the joint (8) is formed with a joint head (9) in the form of a ball as an integral part of the dispensing nozzle (6) and with a joint socket (10) complementary to the joint head (9) as an integral part of the cylinder body (2) at the end face (7) opposite the gripping shoulder (3), and **in that** the dispensing nozzle (6) can be swiveled relative to the cylinder body in a three-dimensional swivel range,
- wherein the diameter (18) of the joint head (9) is larger than the diameter of the cylinder chamber (5).

2. The dental cartridge according to claim 1, **characterized in that** the joint (8) is formed as a mechanism for closing and opening a dispensing path (11) of dental material from the cylinder chamber (5) with a swivel axis (12) and with a swivel angle (13) of at least approximately 110°, preferably at least 135°.

3. The dental cartridge according to claim 1 or 2, **characterized in that** a recess (16) which extends outside the cylinder axis (12) of the cylinder chamber (5) is formed on the joint socket (10) of the cylinder body, and **in that** the dispensing nozzle (6) can be pivoted into the recess (16) by means of a projection (14) adjoining the joint ball and can thus be brought into a closed position of the dental cartridge.

4. The dental cartridge according to claim 3, **characterized in that** the recess (16) is substantially U-shaped and is open towards the front, i.e. towards the side opposite the gripping shoulder.

5. The dental cartridge according to claim 3 or 4, **characterized in that** the dispensing nozzle (6) is formed to be able to be locked to the recess (16), and in particular **in that** a chord of the recess (16), which forms a passage opening for the neck ring to the swivel range within the joint socket, is formed to be smaller, in particular less than 10% smaller, than the diameter of the projection (14).

6. The dental cartridge according to claims 1 to 5, **characterized in that** the dispensing nozzle (6) can be swiveled in all directions in a free swivel range in the open state of the dental cartridge, wherein the swivel angle of the swivel range, viewed from the cylinder axis, is at least 45°.

7. The dental cartridge according to claims 1 to 6, **characterized in that** a channel (21) for the joint head extends therethrough, of which the end facing the cylinder chamber (5) can be closed by swiveling the dispensing nozzle (6).

8. The dental cartridge according to claims 1 to 7, **characterized in that** the dispensing nozzle comprises a spout with a spout axis and a channel (21) with a channel axis is formed in the joint head, wherein the spout axis is formed at an angle of between 0° and 70°, preferably between 30° and 60°, to the channel axis, wherein in particular the channel is formed so as to taper into the neck ring of the dispensing nozzle.

9. The dental cartridge according to claims 1 to 8, **characterized in that** the joint socket is formed as a bead projecting relative to the rest of the cylinder body at the end face (5) opposite the gripping shoulder (3).

10. The dental cartridge according to claims 1 to 9, **characterized in that** the material used for the cylinder body differs from the material used for the dispensing nozzle, wherein a material pairing with a coefficient of sliding friction µ_{slide} between the materials of less than 0.8, in particular of less than 0.6, is used in the joint.

11. The dental cartridge according to claim 9 or 10, **characterized in that** the materials of the cylinder body and the dispensing nozzle are selected from material pairs suitable for material injection molding and preferably have different coefficients of thermal expansion, and in particular consist of PA66/POM, PPS/POM, PPS/PA6 or PEEK/PPS.

12. The dental cartridge according to claims 1 to 11, **characterized in that** the cylinder body and the dispensing nozzle are produced by means of assembly injection molding, in particular by means of two-component assembly injection molding.

## Revendications

1. Cartouche dentaire (1), en particulier pour être insérée dans un injecteur, avec un corps de cylindre (2) avec un épaulement de préhension (3) à une extrémité frontale (4) et avec un espace cylindrique (5) dans lequel un matériau dentaire peut être rempli, avec une buse de distribution (6), qui est disposée à une extrémité frontale (7) du corps de cylindre (2) opposée à l'épaulement de préhension (3), dans lequel le corps de cylindre (2) et la buse de distribution (6) sont reliés par une articulation(8), **caractérisée en ce que**
- l'articulation (8) est réalisée avec une tête d'articulation (9) sous la forme d'une sphère en tant que partie intégrante de la buse de distribution (6) et d'une cavité d'articulation (10) complémentaire à la tête d'articulation (9) en tant que partie intégrante du corps de cylindre (2) à l'extrémité opposée de l'extrémité frontale (7) de l'épaulement de préhension (3), et **en ce que** buse de distribution (6) peut être pivotée dans une plage de pivotement tridimensionnelle par rapport au corps de cylindre,
- où le diamètre (18) de la tête d'articulation (9) est supérieur au diamètre de l'espace cylindrique (5).

2. Cartouche dentaire selon la revendication 1, **caractérisée en ce que** l'articulation (8) est conçue comme un mécanisme de fermeture et d'ouverture d'une voie d'évacuation (11) de matériau dentaire à partir de l'espace cylindrique (5) avec un axe de pivotement (12) et avec un angle de pivotement (13) d'au moins environ 110°, de préférence d'au moins 135°.

3. Cartouche dentaire selon la revendication 1 ou 2, **caractérisée en ce qu'**un évidement (16) est formé sur la cavité d'articulation (10) du corps de cylindre, qui s'étend à l'extérieur de l'axe de cylindre (12) de la chambre de cylindre (5), et **en ce que** la buse de distribution (6) avec un appendice (14) se connectant à la rotule d'articulation peut être pivotée dans l'évidement (16) et peut ainsi être amenée en position de fermeture de la cartouche dentaire.

4. Cartouche dentaire selon la revendication 3, **caractérisée en ce que** l'évidement (16) est essentiellement en forme de U et est ouvert vers l'avant, c'est-à-dire vers le côté opposé à l'épaulement de préhension.

5. Cartouche dentaire selon la revendication 3 ou 4, **caractérisée en ce que** la buse de distribution (6) est conçue pour être encliquetée sur l'évidement (16), et en particulier qu'une branche de l'évidement (16), qui forme une ouverture de passage pour l'a bague de col vers la zone pivotante à l'intérieur de l'alvéole articulaire, est plus petite, en particulier plus petite de 10 % au diamètre de l'appendice (14).

6. Cartouche dentaire selon les revendications 1 à 5, **caractérisée en ce que** la buse de distribution (6) peut être pivotée dans toutes les directions dans une zone de pivotement libre à l'état ouvert de la cartouche dentaire, où l'angle de pivotement de la zone de pivotement, vue depuis l'axe de cylindre, est d'au moins 45°.

7. Cartouche dentaire selon les revendications 1 à 6, **caractérisée en ce qu'** un canal (21) pour la tête d'articulation la traverse, dont l'extrémité orientée vers l'espace cylindrique (5) peut être fermée par pivotement de la buse de distribution (6).

8. Buse dentaire selon les revendications 1 à 7, **caractérisée en ce que** la buse d'application comprend une douille avec un axe de douille et **en ce qu'**un canal (21) avec un axe de canal est formé dans la tête articulée, où l'axe de douille par rapport à l'axe du canal est formé à un angle compris entre 0° et 70°, de préférence entre 30° et 60°, où en particulier le canal se rétrécit jusqu'à la bague de col de la buse de distribution.

9. Cartouche dentaire selon les revendications 1 à 8, **caractérisée en ce que** la cavité d'articulation est formée d'un bourrelet faisant saillie par rapport au reste du corps de cylindre à l'extrémité de l'extrémité frontale (5) opposée à l'épaulement de préhension (3).

10. Cartouche dentaire selon les revendications 1 à 9, **caractérisée en ce que** le matériau du corps de cylindre diffère du matériau de la buse de distribution, où un appariement de matériau présentant un coefficient de frottement de glissement µ_{glissement} entre les matériaux de moins de 0,8 est utilisé, en particulier inférieur à 0,6 dans l'articulation.

11. Cartouche dentaire selon la revendication 9 ou 10, **caractérisée en ce que** les matériaux du corps de cylindre et de la buse de distribution sont choisis parmi des paires de matériaux adaptés au moulage par injection de matériaux et présentent de préférence différents coefficients de dilatation thermique, et sont constitués en particulier de PA66/POM, PPS/POM, PPS/PA6 ou PEEK/PPS.

12. Cartouche dentaire selon les revendications 1 à 11, **caractérisée en ce que** le corps de cylindre et la buse déchargement sont fabriqués par moulage par injection d'assemblage, en particulier par moulage par injection d'assemblage à deux composants.
